# EUROPÄISCHE PATENTSCHRIFT

(11) **EP 0 867 046 B1**
(45) Veröffentlichungstag und Bekanntmachung des Hinweises auf die Patenterteilung: **15.03.2000**
(21) Anmeldenummer: 96945155.8
(22) Anmeldetag: 09.10.1996
(51) Int. Cl.: H01M 8/02

(54) **HOCHTEMPERATUR-BRENNSTOFFZELLE MIT WENIGSTENS EINER ELEKTRISCH ISOLIERENDEN SCHICHT UND VERFAHREN ZUM HERSTELLEN EINER HOCHTEMPERATUR-BRENNSTOFFZELLE**
HIGH-TEMPERATURE FUEL CELL WITH AT LEAST ONE ELECTRICALLY INSULATING LAYER AND A METHOD OF PRODUCING A HIGH-TEMPERATURE FUEL CELL
PILE A COMBUSTIBLE HAUTE TEMPERATURE DOTEE D'AU MOINS UNE COUCHE ELECTROISOLANTE ET SON PROCEDE DE PRODUCTION

(30) Priorität: 12.10.1995 DE 19538034
(43) Veröffentlichungstag der Anmeldung: 30.09.1998
(73) Patentinhaber: SIEMENS AKTIENGESELLSCHAFT, 80333 München (DE)
(72) Erfinder: JANSING, Thomas, D-90425 Nürnberg (DE); DECKER, Jens, D-59619 Rheinbreitbach (DE)
(86) Internationale Anmeldenummer: DE9601931
(87) Internationale Veröffentlichungsnummer: WO9713731

(56) Entgegenhaltungen:
- EP-A- 0 426 265
- EP-A- 0 642 185
- WO-A-94/10717
- WO-A-96/17394
- US-A- 5 338 577
- PATENT ABSTRACTS OF JAPAN vol. 014, no. 308 (E-0947), 3.Juli 1990 & JP 02 100270 A (SANYO ELECTRIC CO LTD), 12.April 1990,
- CHEMICAL ABSTRACTS, vol. 105, no. 14, 6.Oktober 1986 Columbus, Ohio, US; abstract no. 118183, URUSHIBATA, HIROAKI: "Molten-carbonate fuel cell" XP002030642 & JP 61 101 965 A (MITSUBISHI ELECTRIC CORP., JAPAN)
- CHEMICAL ABSTRACTS, vol. 111, no. 2, 10.Juli 1989 Columbus, Ohio, US; abstract no. 10285, KODAMA, YOSHIAKI ET AL: "Fuel cell with dry-seal structure" XP002030643 & JP 01 003 966 A (HITACHI, LTD., JAPAN)
- PATENT ABSTRACTS OF JAPAN vol. 013, no. 117 (E-731), 22.März 1989 & JP 63 289771 A (MITSUBISHI ELECTRIC CORP), 28.November 1988,
- PATENT ABSTRACTS OF JAPAN vol. 015, no. 074 (E-1036), 21.Februar 1991 & JP 02 295068 A (FUJI ELECTRIC CO LTD), 5.Dezember 1990,

## Beschreibung

Die Erfindung bezieht sich auf eine Hochtemperatur-Brennstoffzelle mit wenigstens einer elektrisch isolierenden Schicht und ein Verfahren zum Herstellen einer Hochtemperatur-Brennstoffzelle.

Es ist bekannt, daß miteinander verbundene spannungsführende metallische Komponenten einer Hochtemperatur-Brennstoffzelle teilweise gegeneinander elektrisch isoliert sein müssen. Diese Forderung ist besonders schwierig bei einer hohen Einsatztemperatur zu erfüllen, beispielsweise einer Einsatztemperatur von über 800°C. Oft ist eine stoffschlüssige Verbindung der metallischen Komponenten aufgrund bestimmter Rahmenbedingung nur mit glasartiger Substanz möglich, beispielsweise mit Glas oder Glaslot. Diese glasartige Substanz ist aber normalerweise bei der hohen Einsatztemperatur relativ gut elektrisch leitend und demzufolge ein schlechter elektrischer Isolator.

Darüber hinaus haben diese glasartigen Substanzen die Eigenschaft, sich unter angelegter elektrischer Spannung zu zersetzen. Diese Zersetzung kann bereits bei einer Spannung deutlich unter 1 Volt erfolgen.

Insbesondere aus dem Bericht "Materials for Solid-Oxide High-Temperature Fuel Cells" von W. Drenckhahn et al., Siemens Power Journal, Heft 4, Jahrgang 94, Seiten 36 bis 38, ist bekannt, daß bei Hochtemperatur-Brennstoffzellen zwischen zwei bipolaren Platten ein elektrisches Potential von z.B. 0,7 Volt Betriebsspannung bis 1,3 Volt Ruhespannung anliegt. Bereits bei diesen elektrischen Spannungen kommt es bei Verwendung von glasartiger Substanz zwischen diesen bipolaren Platten zu Zersetzungsreaktionen aufgrund von Elektrolyse, d.h. es erfolgt eine Ionenwanderung von einer Elektrodenseite zur andren. Dabei wird die Grundfestigkeit der glasartigen Substanz schon nach kurzer Zeit beeinträchtigt, wodurch wiederum die Wahrscheinlichkeit für das Auftreten einer Fehlfunktion deutlich erhöht wird.

Überlegungen gehen zur Zeit dahin, zur Vermeidung dieses Nachteils die bipolare Platte mit einer zusätzlichen einlagigen Schicht aus stabilisiertem ZrO₂ zu versehen, die je nach Anforderung bzw. Konstruktion eine Dicke zwischen z.B. 30pm und 150µm aufweist. Hierbei kann optional zur besseren Haftung der Schicht auf der bipolaren Platte ein sogenannter Haftvermittler aus Metall oder Keramik auf die bipolare Platte aufgetragen werden. Das verwendete ZrO₂-Material ist generell mit bekannten technischen Stabilisierungskomponenten wie z.B. Y₂O₃, CaO, MgO, Al₂O₃ oder CeO₂ teil- bzw. vollstabilisiert.

Diese einlagige Schicht hat jedoch eine nicht ausreichende elektrische Isolierung, die aber speziell bei der Verwendung einer glasartigen Substanz zum Zusammenfügen der metallischen Komponenten notwendig ist, da die glasartige Substanz ein schlechter elektrischer Isolator ist.

Aus der US-Patentschrift 5,338,577 ist ein Verfahren zum Beschichten eines metallischen Substrats mit Keramik mittels Flammspritzen bekannt, wobei zunächst eine Zwischenschicht aus Stahl, dann eine Schicht aus Yttrium stabilisiertem ZrO₂ und schließlich eine Al₂O₃-Schicht aufgespritzt wird.

Desweiteren ist aus der Japanischen Offenlegungsschrift 06-144 971 ein Schichtkörper bekannt, der aus einem keramischen Substrat, Haftvermittlerschichten aus Stahl, einer Keramikschicht und gegebenenfalls einer porenschließenden Aussenschicht besteht, wobei die Haftvermittlerschichten und die Keramikschicht mittels Flammspritzen und die Außenschicht mittels Sol-Gel-Technik hergestellt sind.

Außerdem ist aus der US-Offenlegungsschrift H 12 60 ein Verfahren zur Herstellung von Schichtkörpern für Hochtemperatur-Brennstoffzellen mittels eines Plasma-Spritzverfahrens bekannt. Bei diesem wird jedoch nur eine einzige elektrisch isolierende Schicht aus Yttrium stabilisiertem ZrO₂ aufgespritzt.

Der Erfindung liegt nun die Aufgabe zugrunde, eine Hochtemperatur-Brennstoffzelle anzugeben, wobei eine der Schichten die Eigenschaft hat elektrisch möglichst vollständig isolierend zu wirken, gut haftend und mechanisch stabil zu sein. Außerdem liegt der Erfindung die Aufgabe zugrunde, ein Verfahren zum Herstellen einer Hochtemperatur-Brennstoffzelle anzugeben.

Die erstgenannte Aufgabe wird gemäß der Erfindung gelöst durch eine Hochtemperatur-Brennstoffzelle mit wenigstens einer elektrisch isolierenden Schicht, die wenigstens eine erste Lage und eine darauf angeordnete zweite Lage enthält, die jeweils aus einem elektrisch isolierenden keramischen Werkstoff bestehen, wobei sich die Zusammensetzung des keramischen Werkstoffes der ersten Lage von der Zusammensetzung des keramischen Werkstoffes der zweiten Lage unterscheidet. Der Längenausdehnungskoeffizient der ersten Lage entspricht im wesentlichen dem Längenausdehnungskoeffizienen derjenigen Komponente, auf die sie aufgetragen ist, und die zweite Lage ist durch eine gute elektrische Isolation charakterisiert.

Die zweitgenannte Aufgabe wird gemäß der Erfindung gelöst durch ein Verfahren zum Herstellen einer Hochtemperatur-Brennstoffzelle mit wenigstens einer elektrisch isolierenden Schicht, die wenigstens eine erste Lage und eine darauf angeordnete zweite Lage enthält, die jeweils aus einem elektrisch isolierenden keramischen Werkstoff bestehen, wobei sich die Zusammensetzung des keramischen Werkstoffes der ersten Lage von der Zusammensetzung des keramischen Werkstoffes der zweiten Lage unterscheidet, wobei der Längenausdehnungskoeffizient der ersten Lage im wesentlichen dem Längenausdehnungskoeffizienen derjenigen Komponente entspricht, auf die sie aufgetragen ist, und die zweite Lage durch eine gute elektrische Isolation charakterisiert ist, wobei die einzelnen keramischen Lagen nacheinander jeweils durch Spritzen einer Keramik erzeugt und auf eine Komponente aufgetragen werden.

Die Verwendung von mehreren elektrisch isolierenden keramischen Lagen in einer elektrisch isolierenden Schicht hat den Vorteil, daß die unterschiedlichen Anforderungen der elektrischen Isolation und der Haftung von verschiedenen keramischen Lagen getrennt erfüllt werden, wobei sich diese unterschiedlichen Anforderungen in einer einzigen keramischen Lage nicht realisieren lassen. Elektrische Isolation und gute Hafteigenschaften werden somit von mehreren keramischen Lagen unterschiedlicher Zusammensetzung innerhalb einer Schicht erfüllt. Die elektrisch isolierende Schicht umfaßt mindestens eine erste Lage mit guten Hafteigenschaften, d. h. der Längenausdehnungskoeffizient der ersten Lage weicht nur geringfügig von dem Längenausdehnungskoeffizienten derjenigen Komponente ab, auf die die erste Lage aufgetragen wird, und eine zweite Lage, die auf der ersten Lage angeordnet ist und durch eine gute elektrische Isolation charakterisiert ist.

Insbesondere sind wenigstens zwei erste Lagen aus demselben elektrisch isolierenden keramischen Werkstoff durch wenigstens eine zweite Lage aus einem anderen elektrisch isolierenden keramischen Werkstoff voneinander getrennt. Eine einzige keramische Lage reicht nicht für eine ausreichend hohe elektrische Isolation aus. Da die Schichtdicke einer keramischen Lage aufgrund der auftretenden mechanischen Eigenspannungen nicht beliebig vergrößert werden kann, wird eine elektrisch isolierende Schicht mit mehreren keramischen Lagen verwendet. Dabei werden Schichtdicken von beispielsweise 500µm erreicht, ohne daß sich die Eigenspannung der Schicht vergrößert, da sich die Schicht aus mehreren keramischen Lagen zusammensetzt. Dies führt zu einer wesentlichen mechanischen Stabilisierung der gesamten Hochtemperatur-Brennstoffzelle.

Vorzugsweise ist die elektrisch isolierende Schicht mit einem Haftvermittler auf eine Komponente der Hochtemperatur-Brennstoffzelle aufgetragen. Durch den Haftvermittler wird zusätzlich eine gute Haftung der elektrisch isolierenden Schicht auf der Komponente der Hochtemperatur-Brennstoffzelle, auf der die elektrisch isolierende Schicht aufgetragen ist, gewährleistet.

In einer weiteren Ausgestaltung ist auf die elektrisch isolierende Schicht eine Lage zum Schließen und Ausheilen der Poren und Risse in der letzten keramischen Lage aufgetragen.

Insbesondere wird die elektrisch isolierende Schicht durch atmosphärisches Plasmaspritzen, Flammspritzen, Hochgeschwindigkeitsflammspritzen, Vakuum- oder Niederdruckflammspritzen erzeugt. Durch die Anwendung verschiedener Spritzverfahren kann unter verschiedenen äußeren Bedingungen die jeweils erwünschte keramische Schicht erzeugt werden.

Vorzugsweise wird eine Lage auf die elektrisch isolierende Schicht mittels eines Sol-Gels zum Schließen und Ausheilen der Poren und Risse in der letzten keramischen Lage aufgetragen. Wird auf die letzte keramische Lage in einem weiteren Bearbeitungsprozeß eine glasartige Substanz, beispielsweise Glaslot aufgetragen, so ist für eine elektrische Isolierung von erheblicher Bedeutung, daß die letzte keramische Lage der elektrisch isolierenden Schicht eine hohe Dichtgkeit aufweist. Bei einer zu hohen Porosität innerhalb der letzten keramischen Lage dringt die glasartige Substanz in diese Lage ein und die elektrische Isolierung verschlechtert sich.

In einer weiteren Ausgestaltung wird das Sol-Gel nach dem Auftragen vakuuminfiltriert. Durch die Vakuuminfiltration, die auch bereits während des Auftragens erfolgen kann, wird ein Schließen und Ausheilen der Risse und Poren gewährleistet.

Zur weiteren Erläuterung der Erfindung wird auf die Ausführungsbeispiele der Zeichnung verwiesen. Es zeigen:

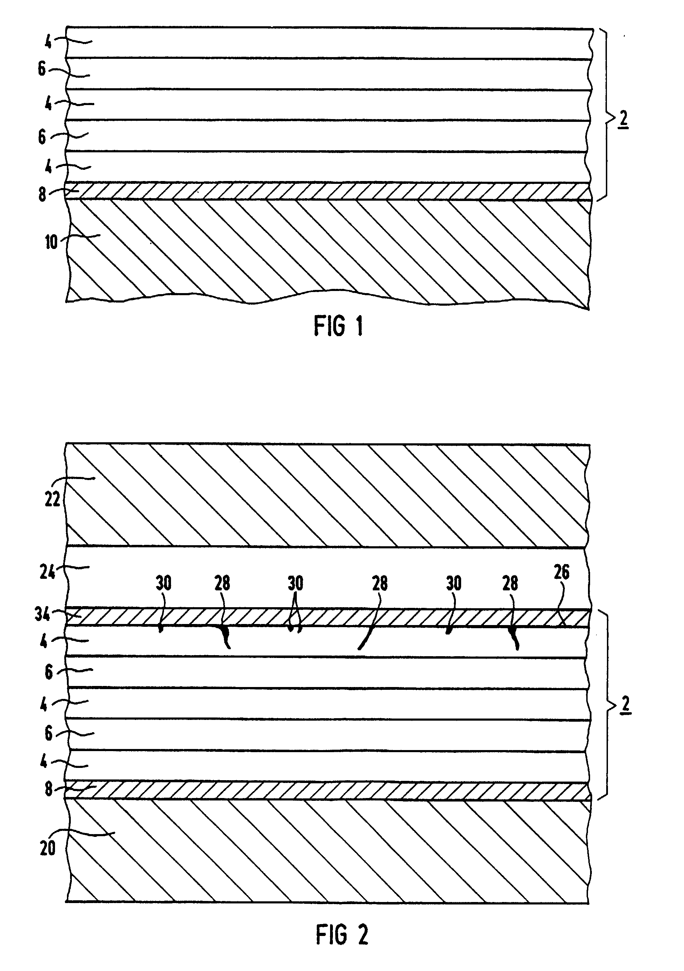

- FIG 1 und FIG 2: Ausschnitte aus einer Hochtemperatur-Brennstoffzelle in schematischer Darstellung.

Gemäß FIG 1 umfaßt der Ausschnitt aus einer Hochtemperatur-Brennstoffzelle eine Komponente 10, beispielsweise eine bipolare Platte, und eine elektrisch isolierende Schicht 2. Dabei ist die elektrisch isolierende Schicht 2 auf der Komponente 10 angeordnet, wobei die elektrisch isolierende Schicht 2 mehrere übereinander angeordnete Lagen 4, 6 enthält, die jeweils aus einem elektrisch isolierenden keramischen Werkstoff bestehen, wobei sich die Zusammensetzung des keramischen Werkstoffes der Lagen 4 von der Zusammensetzung des keramischen Werkstoffes der anderen Lagen 6 unterscheidet.

Dabei sind jeweils zwei Lagen 4 aus demselben elektrisch isolierenden keramischen Werkstoff durch eine aus einem anderen elektrisch isolierenden keramischen Werkstoff bestehende Lage 6 voneinander getrennt.

In einem ersten Schritt wird ein Haftvermittler 8 auf die Komponente 10 aufgetragen. Dabei besteht die Komponente 10 aus einem Metall, einer Metallegierung oder einer Keramik. Beim Einsatz in der Hochtemperatur-Brennstoffzelle wird beispielsweise als Metall CrFe₅Y₂O₃1 verwendet. Andere Sonderlegierungen wie z.B. Haynes Alloy 230, Inconel 600 oder übliche Industrieedelstähle werden ebenfalls häufig verwendet.

Auf den Haftvermittler 8 wird die keramische Lage 4, z.B. aus ZrO₂, gespritzt, welche im thermischen Längenausdehnungskoeffizienten an die Komponente 10 angepaßt ist. Die keramische Lage 4 wird durch das Spritzen dicht auf den Haftvermittler 8 aufgetragen. Die keramische Lage 4 hat somit eine gute Haftung auf der Komponente 10, ist aber nicht geeignet um zugleich eine gute elektrische Isolation zu gewährleisten.

Auf die keramische Lage 4 wird in einem weiteren Schritt die keramische Lage 6 mit einem besseren elektrischen Isolationsverhalten als dasjenige der keramischen Lage 4 aufgetragen. Wird in der keramischen Lage 4 ZrO₂ verwendet, so eignet sich beispielsweise für die keramische Lage 6 hochreines Al₂O₃. Das Al₂O₃ kann z.B. aus Schmelzkorund, Spinellen, z.B. ein MgAl₂O₄, Mulliten oder aus anderer elektrisch isolierender Keramik hergestellt werden. Diese Keramiken haben in der Regel nicht den thermischen Längendehnungskoeffizienten wie die Komponente 10, so daß sie ohne Verwendung der keramischen Lage 4 nur schlecht auf der Komponente 10 haften. Eine Aufeinanderfolge von verschiedenen keramischen Lagen 4, 6 hat somit den Vorteil, daß verschiedene Anforderungen, wie elektrische Isolation und thermischer Längenausdehnungskoeffizient, von verschiedenen Lagen 4, 6 getrennt erfüllt werden. Die keramische Lage 4 gewährleistet ein gutes Haftverhalten, währenddessen die keramische Lage 6 ein gutes elektrisches Isolationsverhalten zeigt.

Für eine ausreichende elektrische Isolation muß die keramische Lage 6 nun eine Dicke haben, die sich in einer einzigen Lage nicht realisieren läßt, da bei zu großen Dicken beträchtliche mechanische Eigenspannungen auftreten, die zu einer Destabilisierung der gesamten Hochtemperatur-Brennstoffzelle führen. Demzufolge werden für eine ausreichende elektrische Isolation mehrere der Lagen 4, 6 übereinander aufgetragen bis die Gesamtdicke der elektrisch isolierenden Schicht 2 für eine elektrische Isolation ausreichend ist.

Das Spritzen der einzelnen keramischen Lagen 4, 6 kann beispielsweise durch atmosphärisches Plasmaspritzen, Flammspritzen, Hochgeschwindigkeitsflammspritzen, Vakuum- oder Niederdruckflammspritzen erfolgen. Durch die Verwendung von verschiedenen Spritzverfahren ist die Möglichkeit gegeben, daß jede beliebige keramische Lage 4, 6 mit den gewünschten Eigenschaften erzeugt werden kann.

Entsprechend dem Ausschnitt einer Hochtemperatur-Brennstoffzelle in FIG 2 ist die elektrisch isolierende Schicht 2 zwischen zwei bipolaren Platten 20 und 22 angeordnet. Die Hochtemperatur-Brennstoffzelle arbeitet üblicherweise bei einer Betriebstemperatur größer 800°C. Eine stoffschlüssige Verbindung der beiden bipolaren Platten 20, 22 ist dabei nur unter Verwendung von glasartiger Substanz möglich. Deshalb wird zwischen der bipolaren Platte 22 und der elektrisch isolierenden Schicht 2 eine Schicht 24 aus glasartiger Substanz angeordnet. Bei dieser glasartigen Substanz kann es sich beispielsweise um ein Glaslot handeln.

Da die Schicht 24 aus glasartiger Substanz in Kontakt mit der zuletzt aufgetragenen keramischen Lage 4 der elektrisch isolierenden Schicht 2 steht, ist die Dichtigkeit dieser keramischen Lage 4 für die elektrische Isolation von erheblicher Bedeutung. Aufgrund der Herstellung durch Spritzen entstehen in der Oberfläche 26 der keramischen Lage 4 Risse 28 und Poren 30, die sich negativ auf die Eigenschaft der elektrischen Isolation auswirken können, da z.B. Glaslot aus der Schicht 24 in die Risse 28 und Poren 30 eindringen kann. Dieses Problem wird gelöst durch das Auftragen einer Lage 34 zum Schließen und Ausheilen der Risse 28 bzw. Poren 30 auf die letzte keramische Lage 4, die zwischen der letzten keramischen Lage 4 und der Schicht 24 aus glasartiger Substanz angeordnet ist.

Durch Auftragen eines wässrigen Sol-Gels als Lage 34, z.B. aus Al(OH)₃, welches sich später zum Al₂O₃ hin entwässert, oder einem Sol-Gel aus MgAl₂O₄-Bestandteilen, lassen sich die Risse 28 und Poren 30 in der Oberfläche 26 der keramischen Lage 4 schließen und ausheilen. Bei diesem Verfahren wird zunächst das wässrige Sol-Gel durch Spritzen mittels Preßluft oder elektrischer Zerstäubung, durch Siebdruck, durch Pinseln, Schwämmeln oder Tauchen auf die Oberfläche 26 der letzten keramischen Lage 4 aufgetragen. In einem weiteren Schritt des Verfahrens wird durch Vakuumfiltration das Sol-Gel der Lage 34 in die Risse 28 und die Poren 30 eingeführt. Nach Abschluß des Verfahrens erhält man somit eine geschlossene glatte Oberfläche 26, in die das Glaslot der Schicht 24 nicht mehr eindringt.

Typische Siegler, die dem Sol-Gel beigemischt werden, werden auf der Basis von Epoxid- und Silikonharzen eingesetzt. Im Falle der Hochtemperatur-Brennstoffzelle wird ein Aluminiumoxidhydroxidsol mit 86 bis 96% Aluminiumoxidhydroxidhydrat und 4 bis 14% Aluminiumazetathydrat in eine Spritzschicht aus ceroxidstabilisiertem Zirkonoxid und/oder einer Schicht aus Aluminiumoxid infiltriert. Die Infiltration kann dabei auch bei Raumtemperatur erfolgen und wahlweise bei Niederdruck.

Die elektrisch isolierende Schicht 2 ist somit aufgrund ihrer elektrischen Isolation und der mechanischen Stabilität hervorragend geeignet für eine Verwendung in einer Hochtemperatur-Brennstoffzelle. Gasführende Kanäle und Hohlräume, die in die elektrisch isolierende Schicht 2 integriert sind, können dadurch gut gegeneinander abgedichtet werden.

## Patentansprüche

1. Hochtemperatur-Brennstoffzelle mit wenigstens einer zwischen zwei bipolaren Platten (10;20,22) angeordneten elektrisch isolierenden Schicht (2), wobei die elektrisch isolierende Schicht (2) wenigstens eine erste Lage (4) und eine darauf angeordnete zweite Lage (6) enthält, die jeweils aus einem elektrisch isolierenden keramischen Werkstoff bestehen, wobei sich die Zusammensetzung des keramischen Werkstoffes der ersten Lage (4) von der Zusammensetzung des keramischen Werkstoffes der zweiten Lage (6) unterscheidet, und wobei der Längenausdehnungskoeffizient der ersten Lage (4) im wesentlichen dem Längenausdehnungskoeffizienten derjenigen Komponente (10, 20, 22) entspricht, auf die sie aufgetragen ist, und die zweite Lage (6) durch eine gute elektrische Isolation charakterisiert ist.

2. Hochtemperatur-Brennstoffzelle nach Anspruch 1, die wenigstens zwei erste Lagen (4) aus demselben elektrisch isolierenden keramischen Werkstoff enthält, die durch wenigstens eine zweite Lage (6) voneinander getrennt sind.

3. Hochtemperatur-Brennstoffzelle nach Anspruch 1 oder 2, bei der die elektrisch isolierenden Schicht (2) mit einem Haftvermittler (8) auf eine Komponente (10) aufgetragen ist.

4. Hochtemperatur-Brennstoffzelle nach einem der vorhergehenden Ansprüche, bei der auf die elektrisch isolierende Schicht (2) eine Lage (34) zum Schließen und Ausheilen der Poren (30) und Risse (28) in der letzten keramischen Lage (4) aufgetragen ist.

5. Verfahren zum Herstellen einer Hochtemperatur-Brennstoffzelle mit wenigstens einer zwischen zwei bipolaren Platten (10;20,22) angeordneten elektrisch isolierenden Schicht (2), wobei die elektrisch isolierende Schicht (2) wenigstens eine erste Lage (4) und eine darauf angeordnete zweite Lage (6) enthält, die jeweils aus einem elektrisch isolierenden keramischen Werkstoff bestehen, wobei sich die Zusammensetzung des keramischen Werkstoffes der ersten Lage (4) von der Zusammensetzung des keramischen Werkstoffes der zweiten Lage (6) unterscheidet, wobei der Längenausdehnungskoeffizient der ersten Lage (4) im wesentlichen dem Längenausdehnungskoeffizienen derjenigen Komponente entspricht, auf die sie aufgetragen ist, und die zweite Lage (6) durch eine gute elektrische Isolation charakterisiert ist, und wobei die einzelnen keramischen Lagen (4, 6) nacheinander jeweils durch Spritzen einer Keramik erzeugt und auf eine Komponente (10) aufgetragen werden.

6. Verfahren nach Anspruch 5, bei dem die elektrisch isolierende Schicht (2) durch atmosphärisches Plasmaspritzen erzeugt wird.

7. Verfahren nach Anspruch 5, bei dem die elektrisch isolierende Schicht (2) durch Flammspritzen erzeugt wird.

8. Verfahren nach Anspruch 7, bei dem die elektrisch isolierende Schicht (2) durch Hochgeschwindigkeitsflammspritzen erzeugt wird.

9. Verfahren nach Anspruch 7, bei dem die elektrisch isolierende Schicht (2) durch Vakuumflammspritzen erzeugt wird.

10. Verfahren nach Anspruch 7, bei dem die elektrisch isolierende Schicht (2) durch Niederdruckflammspritzen erzeugt wird.

11. Verfahren nach einem der Ansprüche 5 bis 10, bei dem eine Lage (34) auf die elektrisch isolierende Schicht (2) zum Schließen und Ausheilen der Poren (30) und Risse (28) in der letzten keramischen Lage (4) mittels eines Sol-Gels aufgetragen wird.

12. Verfahren nach Anspruch 11, bei dem das Sol-Gel nach dem Auftragen vakuuminfiltriert wird.

## Claims

1. High-temperature fuel cell having at least one electrically insulating covering (2), which is arranged between two bipolar plates (10;20,22), the electrically insulating covering (2) containing at least one first layer (4) and a second layer (6) arranged on top of it, which layers are each composed of an electrically insulating ceramic material, the composition of the ceramic material of the first layer (4) being different to the composition of the ceramic material of the second layer (6), and the longitudinal thermal expansion coefficient of the first layer (4) essentially corresponding to the longitudinal thermal expansion coefficient of that component (10, 20, 22) to which the first layer is applied, and the second layer (6) being characterized by good electrical insulation.

2. High-temperature fuel cell according to Claim 1, which contains at least two first layers (4) composed of the same electrically insulating ceramic material, which are separated from one another by at least one second layer (6).

3. High-temperature fuel cell according to Claim 1 or 2, in which the electrically insulating covering (2) is applied to a component (10) using an adhesion promoter (8).

4. High-temperature fuel cell according to one of the preceding claims, in which a layer (34) for closing and healing the pores (30) and cracks (28) in the last ceramic layer (4) is applied onto the electrically insulating covering (2).

5. Method for producing a high-temperature fuel cell having at least one electrically insulating covering (2), which is arranged between two bipolar plates (10;20,22), the electrically insulating covering (2) containing at least one first layer (4) and a second layer (6) arranged on top of it, which layers are each composed of an electrically insulating ceramic material, the composition of the ceramic material of the first layer (4) being different to the composition of the ceramic material of the second layer (6), the thermal expansion coefficient of the first layer (4) essentially corresponding to the thermal expansion coefficient of that component to which the first layer is applied, and the second layer (6) being characterized by good electrical insulation, and the individual ceramic layers (4, 6) each being produced successively by spraying of a ceramic and being applied to a component (10).

6. Method according to Claim 5, in which the electrically insulating covering (2) is produced by atmospheric plasma spraying.

7. Method according to Claim 5, in which the electrically insulating covering (2) is produced by flame spraying.

8. Method according to Claim 7, in which the electrically insulating covering (2) is produced by high-speed of flame spraying.

9. Method according to Claim 7, in which the electrically insulating covering (2) is produced by vacuum flame spraying.

10. Method according to Claim 7, in which the electrically insulating covering (2) is produced by low-pressure flame spraying.

11. Method according to one of Claims 5 to 10, in which a layer (34) is applied by means of a sol gel onto the electrically insulating covering (2) in order to close and heal the pores (30) and cracks (28) in the last ceramic layer (4).

12. Method according to Claim 11, in which the sol gel is vacuum-infiltrated after application.

## Revendications

1. Pile à combustible à haute température, comprenant au moins une couche (2) isolante électriquement interposée entre deux plaques (10 ; 20, 22) bipolaires, la couche (2) isolante électriquement comportant au moins une première couche (4) et une deuxième couche (6) qui est disposée dessus, qui sont constituées respectivement en un matériau céramique isolant électriquement, la composition du matériau céramique de la première couche (4) différant de la composition du matériau céramique de la deuxième couche (6), et le coefficient de dilatation thermique de longueur de la première couche (4) correspondant sensiblement au coefficient de dilatation thermique de longueur des éléments (10 ; 20, 22), sur laquelle elle est déposée et la seconde couche (6) étant caractérisée par une bonne isolation électrique.

2. Pile à combustible à haute température suivant la revendication 1, qui comporte au moins deux premières couches (4) en le même matériau céramique isolant électriquement, qui sont séparées l'une de l'autre par une deuxième couche (6).

3. Pile à combustible à haute température suivant la revendication 1 ou 2, dans laquelle la couche (2) isolante électriquement est déposée avec un adhésif (8) sur un élément (10).

4. Pile à combustible à haute température suivant l'une des revendications précédentes, dans laquelle il est déposé sur la couche (2) isolante électriquement une couche (34) de fermeture et de consolidation des pores (30) et des fissures (28) de la dernière couche (4) en céramique.

5. Procédé de production d'une pile à combustible à haute température, comprenant au moins une couche (2) isolante électriquement interposée entre deux plaques (10 ; 20, 22) bipolaires, la couche (2) isolante électriquement comportant au moins une première couche (4) et une deuxième couche (6) qui est disposée dessus, qui sont constituées respectivement d'un matériau céramique isolant électriquement, la composition du matériau céramique de la première couche (4) différant de la composition du matériau céramique de la deuxième couche (6), le coefficient de dilatation thermique de longueur de la première couche (4) correspondant sensiblement au coefficient de dilatation thermique de longueur des composants sur lesquels elle est déposée, et la deuxième couche (6) étant caractérisée par une bonne isolation électrique, les couches (4, 6) céramiques étant produites successivement respectivement par projection d'une céramique et étant déposées sur un élément (10).

6. Procédé suivant la revendication 5, dans lequel la couche (2) isolante électriquement est produite par projection au plasma sous la pression atmosphérique.

7. Procédé suivant la revendication 5, dans lequel la couche (2) isolante électriquement est produite par projection à la flamme.

8. Procédé suivant la revendication 7, dans lequel la couche (2) isolante électriquement est produite par projection à la flamme à grande vitesse.

9. Procédé suivant la revendication 7, dans lequel la couche (2) isolante électriquement est produite par projection à la flamme sous vide.

10. Procédé suivant la revendication 7, dans lequel la couche (2) isolante électriquement est produite par projection à la flamme sous basse pression.

11. Procédé suivant l'une des revendications 5 à 10, dans lequel une couche (34) est déposée au moyen d'un sol-gel sur la couche (2) isolante électriquement, pour fermer et consolider les pores (30) et les fissures (28) de la dernière couche (4) céramique.

12. Procédé suivant la revendication 11, dans lequel le sol-gel est infiltré sous vide après le dépôt.
